# EUROPÄISCHE PATENTANMELDUNG

(11) **EP 2 166 641 A2**
(43) Veröffentlichungstag der Anmeldung: **24.03.2010**
(21) Anmeldenummer: 09167684.1
(22) Anmeldetag: 12.08.2009
(51) Int. Cl.: H02J 7/00

(54) **Ladevorrichtung für einen Akkumulator**

(30) Priorität: 22.09.2008 DE 102008042267
(71) Anmelder: Robert Bosch GmbH, 70442 Stuttgart (DE)
(72) Erfinder: Tiede, Steffen, 71083 Herrenberg (DE); Gairing, Juergen, 70195 Stuttgart (DE)

(57) **Zusammenfassung**

Bei einer Ladevorrichtung (10) für einen Akkumulator (30), mit einem Gehäuse (18), das eine Ladeaufnahme (20) für den Akkumulator (30) aufweist, und mit einer Netzleitung (12) zur Verbindung der Ladevorrichtung (10) mit einem Stromnetz (40), ist an dem Gehäuse (18) zumindest ein erstes Schaltelement (22) vorgesehen, das betätigbar ist, um die Verbindung der Ladevorrichtung (10) mit dem Stromnetz (40) zur Energieversorgung der Ladevorrichtung (10) über die Netzleitung (12) zu aktivieren.

## Beschreibung

### Stand der Technik

Die vorliegende Erfindung betrifft eine Ladevorrichtung für einen Akkumulator, mit einem Gehäuse, das eine Ladeaufnahme für den Akkumulator aufweist, und mit einer Netzleitung zur Verbindung der Ladevorrichtung mit einem Stromnetz.

Derartige Ladevorrichtungen dienen zum Aufladen von elektrochemischen Energiespeichern, sogenannten Akkumulatoren, die in der Regel aus einzelnen, zu Packs oder Modulen zusammen geschalteten Akkumulatorzellen bestehen und deshalb häufig auch als Akkupacks oder Akku-Module bezeichnet werden. Die Ladevorrichtungen sind in der Regel mit Stromnetzen verbindbar, die üblicherweise im Wechselspannungsbereich von 115-240 V betrieben werden.

Zur Inbetriebnahme einer entsprechenden Ladevorrichtung wird diese zunächst über die Netzleitung mit dem Stromnetz verbunden. Dann wird der eigentliche Ladevorgang durch Einschub eines Akkumulators in eine der Ladevorrichtung zugeordnete Ladeaufnahme aktiviert. Nach dem Aufladen des Akkumulators wird dieser aus der Ladeaufnahme entfernt, woraufhin die Verbindung der Ladevorrichtung mit dem Stromnetz unterbrochen werden kann. Alternativ kann die Ladevorrichtung im Leerlaufbetrieb mit dem Stromnetz verbunden bleiben.

Nachteilig am Stand der Technik ist, dass gebräuchliche Ladevorrichtungen nicht nur beim Aufladen von Akkumulatoren Energie verbrauchen, sondern auch dann, wenn sie im Leerlaufbetrieb ohne einen aufzuladenden Akkumulator mit dem Stromnetz verbunden sind. Dies ist insbesondere bei konstant mit dem Stromnetz verbundenen Ladevorrichtungen der Fall und führt zu einem unerwünschten Energieverbrauch und somit zu vermeidbaren Stromkosten. Die Höhe des unerwünschten Energieverbrauchs und der damit einhergehenden vermeidbaren Stromkosten ist von der Anzahl und Leistungsfähigkeit der Ladevorrichtungen abhängig und umso höher, je größer die Anzahl der konstant mit dem Stromnetz verbundenen, hoch leistungsfähigen Ladevorrichtungen ist. Z.B. benötigen gebräuchliche Ladevorrichtungen zum Aufladen von Akkumulatoren mit einer Kapazität von 2 Ah etwa eine Energie von 1,5 W im Leerlaufbetrieb.

### Offenbarung der Erfindung

Eine Aufgabe der Erfindung ist es daher, eine neue Ladevorrichtung bereit zu stellen, deren Energieverbrauch im Leerlaufbetrieb zumindest reduziert wird.

Dieses Problem wird gelöst durch eine Ladevorrichtung für einen Akkumulator, mit einem Gehäuse, das eine Ladeaufnahme für den Akkumulator aufweist, und mit einer Netzleitung zur Verbindung der Ladevorrichtung mit einem Stromnetz. An dem Gehäuse ist zumindest ein erstes Schaltelement vorgesehen, das betätigbar ist, um die Verbindung der Ladevorrichtung mit dem Stromnetz zur Energieversorgung der Ladevorrichtung über die Netzleitung zu aktivieren.

Die Erfindung ermöglicht somit, die mit dem Stromnetz verbundene Ladevorrichtung im Leerlaufbetrieb stromlos zu schalten. Hierbei ist die Energieversorgung der Ladevorrichtung erfindungsgemäß nur durch eine Betätigung des ersten Schaltelements aktivierbar, sodass ein ungewünschter Energieverbrauch im Leerlaufbetrieb verhindert wird und damit einhergehende unnötige Stromkosten somit vermieden werden.

Gemäß einer Ausführungsform ist das erste Schaltelement ein Kipp- oder Druckschalter.

Somit kann die erfindungsgemäße Ladevorrichtung durch Verwendung eines kostengünstigen Schaltelements auf einfache Art und Weise realisiert werden

Das erste Schaltelement ist bevorzugt im Bereich der Ladeaufnahme angeordnet. Das erste Schaltelement ist vorzugsweise durch ein Einschieben des Akkumulators in die Ladeaufnahme betätigbar.

Somit ermöglicht die Erfindung eine einfache Ausgestaltung sowie eine unkomplizierte Handhabung der Ladevorrichtung.

Die Ladeaufnahme kann als Aufnahmeschacht ausgebildet sein. Hierbei ist das erste Schaltelement bevorzugt im Aufnahmeschacht angeordnet. Alternativ hierzu kann die Ladeaufnahme als Aufnahmebucht ausgebildet sein. Hierbei ist das erste Schaltelement vorzugsweise in der Aufnahmebucht angeordnet.

Die Erfindung ermöglicht somit eine einfache und unkomplizierte Ausgestaltung verschiedenartig realisierter Ladevorrichtungen, bei denen eine Anordnung des ersten Schaltelements jeweils in Abhängigkeit von einer zugeordneten Ausgestaltung der Ladeaufnahme erfolgen kann.

Gemäß einer Ausführungsform ist am Gehäuse ein zweites Schaltelement vorgesehen, das betätigbar ist, um einen Ladevorgang zum Aufladen des Akkumulators zu aktivieren.

Somit kann der Ladevorgang unabhängig von der Verbindung zwischen Ladevorrichtung und Stromnetz aktiviert werden.

Das erste Schaltelement kann einen mechanischen, optischen, induktiven und/oder kapazitiven Schalter aufweisen.

Die Erfindung ermöglicht somit eine einfache und effiziente Ausgestaltung des ersten Schaltelements.

### Kurze Beschreibung der Zeichnungen

Die Erfindung ist anhand eines in den Zeichnungen dargestellten Ausführungsbeispiels in der nachfolgenden Beschreibung näher erläutert. Es zeigen:
Fig. 1 eine erste Ausführungsform einer Ladevorrichtung mit einem Akkumulator gemäß der Erfindung,
Fig. 2 eine vergrößerte Ansicht der Ladeaufnahme der Ladevorrichtung von Fig. 1, und
Fig. 3 eine zweite Ausführungsform einer Ladevorrichtung mit einem Akkumulator, der mit einer Elektrowerkzeugmaschine verbunden ist, gemäß der Erfindung.

### Beschreibung der Ausführungsbeispiele

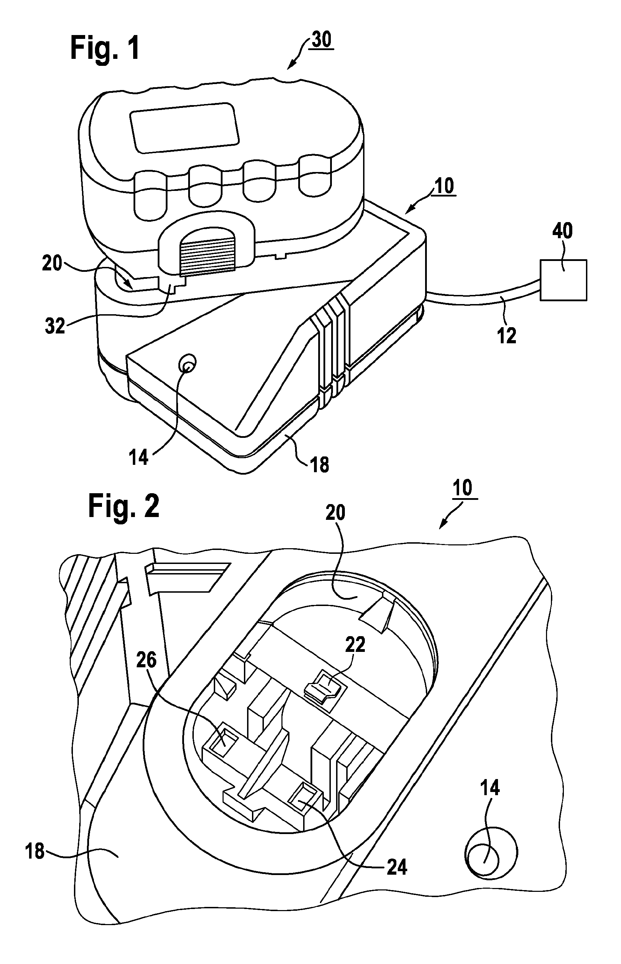

Fig. 1 zeigt eine erste Ausführungsform einer Ladevorrichtung 10 zum Aufladen eines Akkumulators 30 im Ladebetrieb. Der Akkumulator 30 weist beispielhaft ein stabförmiges Schnittstellenelement 32 mit Kontaktelementen zur Kontaktierung zugeordneter Gegenkontaktelemente (24 und 26 in Fig. 2) der Ladevorrichtung 10 auf.

Gemäß einer Ausführungsform umfasst der Akkumulator 30 eine Mehrzahl von Akkumulatorzellen, die zu einem Pack oder Modul zusammen geschaltet sind, wobei die Akkumulatorzellen von einem beliebigen Akkumulatortyp sein können, wie z.B. NiCd, NiMh und Li-lon. Der Aufbau des Akkumulators 30 sowie eine mögliche Ausgestaltung des stabförmigen Schnittstellenelements 32 sind jedoch nicht Bestandteil der vorliegenden Erfindung, sodass hier auf deren genauere Beschreibung zwecks Knappheit der Beschreibung verzichtet wird. Insbesondere kann der Akkumulator 30 gemäß einer Ausführungsform der Erfindung wie ein gebräuchlicher Akkumulator ausgebildet sein.

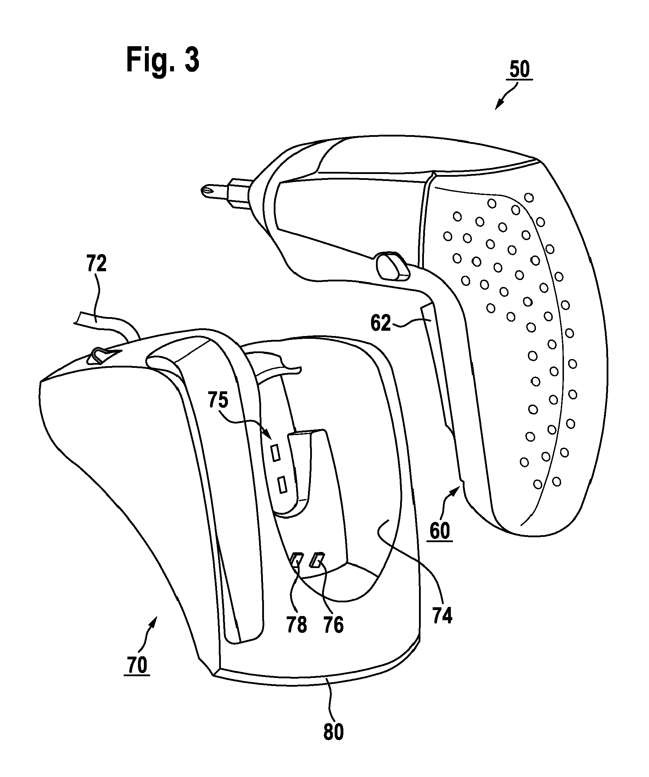

Der Akkumulator 30 dient bevorzugt zur Stromversorgung eines zum Antrieb einer Elektrowerkzeugmaschine ausgebildeten Elektromotors und findet z.B. in einem Akkubohrer und/oder einem Akkuschrauber (50 in Fig. 3) Anwendung. Es wird jedoch darauf hingewiesen, dass die Verwendung des Akkumulators 30 zur Stromversorgung einer Elektrowerkzeugmaschine lediglich beispielhaft beschrieben ist, die Verwendung des Akkumulators 30 jedoch nicht hierauf beschränkt ist. Vielmehr kann der Akkumulator 30 in vielen unterschiedlichen Vorrichtungen Anwendung finden, z.B. in einem stationären Energiespeicher oder einem Energiespeicher in Fahrzeugen. Derartige und weitere Modifikationen und Variationen sind im Rahmen der vorliegenden Erfindung möglich.

Die Ladevorrichtung 10 weist ein Gehäuse 18 auf, an dem eine Ladeaufnahme 20 zur Aufnahme des Akkumulators 30 vorgesehen ist, sowie eine Netzleitung 12 zur Verbindung mit einem schematisch dargestellten Stromnetz 40. Das Stromnetz 40 wird bevorzugt im Wechselspannungsbereich von 115-240 V betrieben. Es wird jedoch darauf hingewiesen, dass die Ladevorrichtung 10 Anwendungs- und Akkumulatorspezifisch auch für Stromnetze ausgelegt sein kann, die in anderen Spannungsbereichen betrieben werden, z.B. im Gleichspannungsbereich bei 12 V. Derartige und weitere Modifikationen und Variationen sind im Rahmen der vorliegenden Erfindung möglich.

Darüber hinaus kann die Ladevorrichtung 10 optional eine Funktionsanzeige 14 aufweisen. Diese ist in Fig. 1 beispielhaft als eine LED-Leuchte ausgebildet, die z.B. nur dann leuchtet, wenn die Vorrichtung 10 im Ladebetrieb ist, d.h. wenn ein entsprechender Ladevorgang abläuft.

Fig. 2 verdeutlicht die im Gehäuse 18 der Ladevorrichtung 10 von Fig. 1 vorgesehene Ladeaufnahme 20 und die als LED-Leuchte ausgebildete Funktionsanzeige 14. Die Ladeaufnahme 20 ist beispielhaft als Aufnahmeschacht ausgebildet, in dem Gegenkontaktelemente 24, 26 zur Kontaktierung der an dem Schnittstellenelement 32 des Akkumulators 30 von Fig. 1 vorgesehenen Kontaktelemente angeordnet sind.

Gemäß einer Ausführungsform ist im Bereich der Ladeaufnahme 20 ein Schaltelement 22 vorgesehen, das wie unten stehend beschrieben zur Aktivierung bzw. Deaktivierung der Verbindung zwischen der Ladevorrichtung 10 und dem Stromnetz 40 von Fig. 1 bzw. eines der Ladevorrichtung 10 zugeordneten Netzteils dient. Darüber hinaus kann im Bereich der Ladeaufnahme 20, wie unten bei Fig. 3 beschrieben, ein zusätzliches Schaltelement (78 in Fig. 3) vorgesehen sein, das zur Aktivierung eines entsprechenden Ladevorgangs des Akkumulators 30 dient.

Wie in Fig. 2 gezeigt ist das Schaltelement 22 bevorzugt in dem die Ladeaufnahme 20 ausbildenden Aufnahmeschacht angeordnet und über das Schnittstellenelement 32 des Akkumulators 30 von Fig. 1 betätigbar. Das Schaltelement 22 ist beispielsweise als Kipp- oder Druckschalter oder als ein einfacher Kontakt ausgebildet und vorzugsweise durch geeignete Maßnahmen insbesondere vor Staub geschützt, um ein Eindringen von Fremdkörpern in die Ladevorrichtung 10 zu verhindern.

Es wird darauf hingewiesen, dass die Ausgestaltung des Schaltelements 22 als Kipp- oder Druckschalter bzw. als mechanischer Schalter lediglich beispielhaft beschrieben ist und nicht als Einschränkung der Erfindung zu verstehen ist. Vielmehr kann bei der Realisierung des Schaltelements sowohl ein mechanischer Schalter, als auch ein anderer Schalter, z.B. ein optischer, induktiver und/oder kapazitiver Schalter, Anwendung finden. Derartige und weitere Modifikationen und Variationen sind im Rahmen der vorliegenden Erfindung möglich.

Im Betrieb der Ladevorrichtung 10 von Fig. 1 und 2 wird diese zunächst über die Netzleitung 12 mit dem Stromnetz 40 verbunden. Dann wird das Schnittstellenelement 32 des Akkumulators 30 in die Ladeaufnahme 20 eingeschoben. Einerseits kontaktieren hierbei die am Schnittstellenelement 32 vorgesehenen Kontaktelemente die zugeordneten Gegenkontaktelemente 24, 26 der Ladevorrichtung 10. Andererseits betätigt das Schnittstellenelement 32 das Schaltelement 22, wobei die Verbindung der Ladevorrichtung 10 mit dem Stromnetz 40 bzw. ein zugeordnetes Netzteil zur Energieversorgung der Ladevorrichtung 10 über die Netzleitung 12 aktiviert wird. Die LED-Leuchte 14 leuchtet daraufhin z.B. auf, um einen entsprechenden Ladebetrieb bzw. eine Ausführung eines Ladevorgangs zu signalisieren. Während dieses Ladevorgangs wird der Akkumulator 30 über die am Schnittstellenelement 32 vorgesehenen Kontaktelemente und die zugeordneten Gegenkontaktelemente 24, 26 der Ladevorrichtung 10 aufgeladen.

Nach Beendigung des Ladevorgangs wird die LED-Leuchte 14 vorzugsweise ausgeschaltet. Der Akkumulator 30 kann dann aus der Ladevorrichtung 10 entnommen werden, um z.B. mit einer zugeordneten Elektrowerkzeugmaschine zu deren Antrieb verbunden zu werden, wobei durch eine erneute Betätigung bzw. eine Freigabe des Schaltelements 22 die Ladevorrichtung 10 bzw. ein zugeordnetes Netzteil stromlos geschaltet wird.

Fig. 3 zeigt eine zweite Ausführungsform einer Ladevorrichtung 70 zum Aufladen eines Akkumulators 60 im Leerlaufbetrieb. Der Akkumulator 60 weist beispielhaft ein Schnittstellenelement 62 mit Kontaktelementen zur Kontaktierung zugeordneter Gegenkontaktelemente 75 der Ladevorrichtung 70 auf.

Wie aus Fig. 3 ersichtlich, dient der Akkumulator 60 zur Stromversorgung eines Elektromotors zum Antrieb einer Elektrowerkzeugmaschine 50, die beispielhaft als Akkuschrauber ausgebildet ist. Gemäß einer Ausführungsform ist der Akkumulator 60 integraler Bestandteil des Akkuschraubers 50. Alternativ hierzu kann er jedoch auch als separates Bauteil ausgeführt sein, wie z.B. der Akkumulator 30 von Fig. 1. Derartige und weitere Modifikationen und Variationen sind im Rahmen der vorliegenden Erfindung möglich.

Die Ladevorrichtung 70 weist ein Gehäuse 80 auf, an dem eine Ladeaufnahme 74 zur Aufnahme des Akkumulators 60 vorgesehen ist, sowie eine Netzleitung 72 zur Verbindung mit einem geeigneten Stromnetz, z.B. Stromnetz 40 von Fig. 1. Die Ladeaufnahme 74 ist beispielhaft als Aufnahmebucht ausgebildet, in der die Gegenkontaktelemente 75 angeordnet sind. Diese Aufnahmebucht ist bevorzugt derart ausgebildet, dass der Akkuschrauber 50 mit dem Akkumulator 60 zum Aufladen in die Aufnahmebucht gelegt werden, d.h. auch der Akkuschrauber 50 wird im Ladebetrieb zumindest teilweise darin aufgenommen.

Gemäß einer Ausführungsform ist im Bereich der Ladeaufnahme 74 ein erstes Schaltelement 76 vorgesehen, das zur Aktivierung bzw. Deaktivierung der Verbindung zwischen der Ladevorrichtung 70 und einem Stromnetz bzw. eines der Ladevorrichtung 70 zugeordneten Netzteils dient. Darüber hinaus ist im Bereich der Ladeaufnahme 74 ein zweites Schaltelement 78 vorgesehen, das zur Aktivierung eines entsprechenden Ladevorgangs des Akkumulators 60 dient. Wie aus Fig. 3 ersichtlich, sind das erste und zweite Schaltelement 76, 78 bevorzugt in der die Ladeaufnahme 74 ausbildenden Aufnahmebucht angeordnet und über das Schnittstellenelement 62 des Akkumulators 60 betätigbar. Hierbei können das erste und/oder zweite Schaltelement 76, 78 z.B. als Kipp- oder Druckschalter oder als ein einfacher Kontakt ausgebildet sein und sind vorzugsweise durch geeignete Maßnahmen insbesondere vor Staub geschützt, um ein Eindringen von Fremdkörpern in die Ladevorrichtung 70 zu verhindern.

Der Betrieb der Ladevorrichtung 70 entspricht im Wesentlichen dem Betrieb der Ladevorrichtung 10 von Fig. 1 und 2, so dass auf eine detaillierte Beschreibung verzichtet werden kann. Es wird jedoch darauf hingewiesen, dass im Ladebetrieb der Ladevorrichtung 70 wie bereits oben beschrieben zumindest ein Teil des Akkuschraubers 50 mit dem Akkumulator 60 in der Ladeaufnahme 74 aufgenommen wird.

## Patentansprüche

1. Ladevorrichtung (10) für einen Akkumulator (30), mit einem Gehäuse (18), das eine Ladeaufnahme (20) für den Akkumulator (30) aufweist, und mit einer Netzleitung (12) zur Verbindung der Ladevorrichtung (10) mit einem Stromnetz (40), **dadurch gekennzeichnet, dass** an dem Gehäuse (18) zumindest ein erstes Schaltelement (22) vorgesehen ist, das betätigbar ist, um die Verbindung der Ladevorrichtung (10) mit dem Stromnetz (40) zur Energieversorgung der Ladevorrichtung (10) über die Netzleitung (12) zu aktivieren.

2. Ladevorrichtung nach Anspruch 1, **dadurch gekennzeichnet, dass** das erste Schaltelement (22) ein Kipp- oder Druckschalter ist.

3. Ladevorrichtung nach Anspruch 1 oder 2, **dadurch gekennzeichnet, dass** das erste Schaltelement (22) im Bereich der Ladeaufnahme (20) angeordnet ist.

4. Ladevorrichtung nach Anspruch 3, **dadurch gekennzeichnet, dass** das erste Schaltelement (22) durch ein Einschieben des Akkumulators (30) in die Ladeaufnahme (20) betätigbar ist.

5. Ladevorrichtung nach Anspruch 3 oder 4, **dadurch gekennzeichnet, dass** die Ladeaufnahme (20) als Aufnahmeschacht ausgebildet ist.

6. Ladevorrichtung nach Anspruch 5, **dadurch gekennzeichnet, dass** das erste Schaltelement (22) im Aufnahmeschacht angeordnet ist.

7. Ladevorrichtung nach Anspruch 3 oder 4, **dadurch gekennzeichnet, dass** die Ladeaufnahme (20) als Aufnahmebucht (74) ausgebildet ist.

8. Ladevorrichtung nach Anspruch 7, **dadurch gekennzeichnet, dass** das erste Schaltelement (22) in der Aufnahmebucht angeordnet ist.

9. Ladevorrichtung nach einem der vorhergehenden Ansprüche, **dadurch gekennzeichnet, dass** am Gehäuse (18) ein zweites Schaltelement (78) vorgesehen ist, das betätigbar ist, um einen Ladevorgang zum Aufladen des Akkumulators (30) zu aktivieren.

10. Ladevorrichtung nach einem der vorhergehenden Ansprüche, **dadurch gekennzeichnet, dass** das erste Schaltelement (22) einen mechanischen, optischen, induktiven und/oder kapazitiven Schalter aufweist.
